# EUROPEAN PATENT SPECIFICATION

(11) **EP 1 537 307 B1**
(45) Date of publication and mention of the grant of the patent: **26.04.2006**
(21) Application number: 03793847.9
(22) Date of filing: 18.08.2003
(51) Int. Cl.: F01P 7/16

(54) **ENGINE COOLING SYSTEMS**
MOTORKÜHLSYSTEME
CIRCUITS DE REFROIDISSEMENT MOTEUR

(30) Priority: 04.09.2002 GB 0220480
(43) Date of publication of application: 08.06.2005
(73) Proprietor: Ford Global Technologies, LLC, Dearborn, Michigan 48126-2490 (US)
(72) Inventor: HUTCHINS, William Richard, Kenilworth, Warwickshire CV8 1PP (GB)
(74) Representative: Farrow, Robert Michael
(86) International application number: PCT/GB2003/003586
(87) International publication number: WO 2004/022940

(56) References cited:
- EP-A- 0 870 911
- EP-A- 1 055 813
- US-A- 4 517 929
- US-B1- 6 196 168

## Description

This invention relates to engine cooling systems particularly but not exclusively for motor vehicles having a liquid cooled engine.

Typically, a motor vehicle cooling system comprises a primary cooling circuit having an air-cooled radiator for cooling a liquid coolant for the engine. A pump circulates the coolant through the engine and then to the radiator or to a bypass through an engine return line and back to the pump through a thermostatic flow control valve or main thermostat and a pump return line. Coolant cooled by the radiator passes through a radiator return line to the main thermostat and then back to the pump through a pump return line. The main thermostat controls the flow through the radiator, preventing flow until the engine has reached an appropriate running temperature.

It is known to use the main engine coolant to cool one or more auxiliary heat exchangers such as exhaust gas recirculation (EGR) cooler forming part of an exhaust gas recirculation (EGR) system. An example of an EGR cooler is shown in US-A-6141961. In one known arrangement, the EGR cooler is connected between the hot delivery line from the engine and the cold return to the pump. This has a disadvantage in that the EGR cooler ceases to be effective once the engine and cooling system have warmed up to a significant degree. To overcome this, it has been proposed to connect the EGR cooler between the cold radiator return line from the engine radiator and the cold return to the pump. However, this requires a thermostatic flow control valve which relies on a minimal coolant flow through the EGR cooler to be able to sense the coolant temperature. This minimal flow robs the engine and cooling system of valuable heat during the initial warm-up phase since it passes through the radiator and is thus cooled down from engine delivery temperature right down to ambient temperature. EP-A-0870911 shows an engine cooling system according to the preamble of claim 1 where flow to an auxiliary heat exchanger is taken from both the hot delivery line from the engine and the cold radiator return line to the pump, flow being controlled by a flow control valve according to the temperature of the coolant flowing out of the auxiliary heat exchanger. Because the temperature of such flow is essentially the same as that of the hot delivery from the engine but reduced by the auxiliary heat exchanger, in this case engine and transmission oils, this arrangement will allow cold flow from the radiator once engine temperature has reached a certain magnitude irrespective of the ambient air temperature. Thus under cold ambient conditions, cold flow from the radiator can still impede rapid warm up of the engine with adverse affects on emissions and on heater performance.

It is an object of this invention to provide an improved cooling system which helps to alleviate such problems.

According to the invention there is provided an engine cooling system comprising a primary cooling circuit having a radiator for cooling liquid coolant for the engine, a bypass arranged in parallel with the radiator, a pump to circulate the coolant through the engine, the radiator and the bypass and a primary flow control valve to control flow as between the radiator and the bypass, the primary flow control valve being operative to prevent flow through the radiator until the engine has reached an appropriate running temperature, an engine supply line being arranged to deliver coolant from the pump to the engine, an engine return line being arranged to deliver coolant from the engine to the bypass and to the radiator, a radiator return line being arranged to deliver coolant from the radiator to the primary flow control valve and a pump return line being arranged to deliver coolant from the primary flow control valve to the pump, the cooling system also comprising an auxiliaries cooling circuit having an auxiliary heat exchanger arranged so that coolant can flow from the engine return line and from the radiator return line through the auxiliary heat exchanger and be returned as an auxiliaries return flow into the pump return line, a secondary flow control valve having a first inlet connected to the engine return line, a second inlet connected to the radiator return line and an outlet connected to the auxiliary heat exchanger and a thermally-responsive actuator controlled by a temperature sensing means operative to sense coolant temperature such that the secondary flow control valve can control flow as between flow from the engine return line through the first inlet and flow from the radiator return line through the second inlet, preventing flow from the radiator return line through the second inlet until a first predetermined temperature is sensed by the temperature sensing means and restricting the flow from the engine return line through the first inlet so that substantially no flow is allowed through the first inlet when the temperature sensed by the temperature sensing means exceeds a second predetermined temperature, characterised in that the temperature sensing means is operative to sense the temperature of the coolant from the radiator return line at the second inlet and the temperature of the coolant from the engine return line at the first inlet.

In a preferred arrangement, the secondary flow control valve comprises a housing, the housing defining the first inlet, the second inlet, the outlet and a valve chamber, and a valve assembly mounted in the valve chamber, the valve assembly comprising a valve shuttle and a biasing means to bias the valve shuttle towards a position in which the valve assembly allows flow through the first inlet to the outlet while preventing flow through the second inlet to the outlet. The valve assembly may further comprise the thermally-responsive actuator, the thermally-responsive actuator being arranged to urge the valve shuttle against the biasing means to allow flow through the second inlet to the outlet when the coolant from the engine return line reaches the first predetermined temperature while continuing to allow the flow from the first inlet through to the outlet. The valve assembly may be arranged so that, with increasing temperature of the flow from the engine return line, the valve shuttle moves further against the biasing means to obstruct the flow from the engine return line through the first inlet when the second predetermined temperature is attained while continuing to allow flow from the radiator return line from the second inlet through to the outlet.

The valve shuttle may have a main valve member which cooperates with the housing to close the second inlet. In such a case, the main valve member may also cooperate with the housing to obstruct the first inlet when the second predetermined temperature is attained.

In a preferred arrangement, the thermally-responsive actuator comprises an actuator body fast with the valve shuttle and a pushrod extending from one end of the actuator body for cooperation with an abutment on the housing, the temperature sensing means comprising a temperature sensitive portion of the actuator body. The abutment may be in the second inlet.

The biasing means may be a helical spring which may be axially guided by the housing. Conveniently, the helical spring is located in the first inlet. The valve shuttle may have a fluted end portion which is engaged within the helical spring so that the valve shuttle is axially guided by the helical spring. The fluted end portion may comprise elongate fins, each lin having a step to form a reaction surface for the helical spring.

A retainer may be in the first inlet to form a reaction surface for the biasing means.

The valve shuttle may be shaped to allow coolant to directly contact the temperature sensitive portion of the actuator body. In such a case, the valve shuttle may be shaped to allow coolant to directly contact one area of the temperature sensitive portion of the actuator body on the side of the main valve member towards the first inlet and to directly contact another area of the temperature sensitive portion of the actuator body on the side of the main valve member towards the second inlet.

The invention will now be described by way of example and with reference to the accompanying drawings, of which:-
Fig.1 is a diagrammatic representation of an engine cooling system according to the invention; and
Fig.2 is a cross-section through a secondary flow control valve shown in Fig.1.

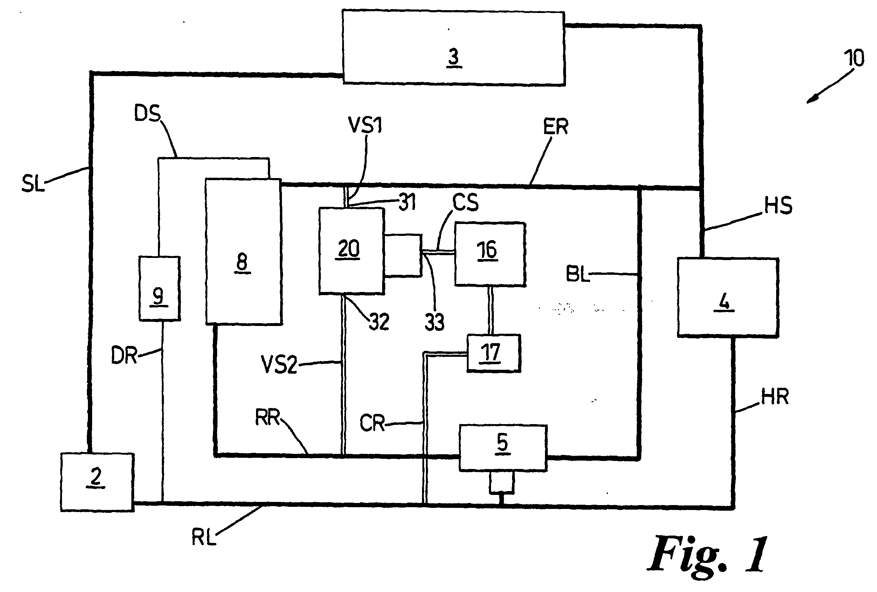

With particular reference to Fig.1, a motor vehicle cooling system 10 comprises a primary cooling circuit having an air-cooled radiator 8 for cooling a liquid coolant for the engine 3. A pump 2 circulates the coolant through the engine 3 and then to the radiator 8 or to a bypass BL through an engine return line ER. Coolant from the radiator 8 and the bypass BL is returned to the pump 2 through a primary flow control valve 5 and a pump return line RL. The primary flow control valve 5 is usually simply referred to as the thermostat. Here it will be referred to as the main thermostat 5 to avoid any confusion with other parts of the cooling system. An appropriate main thermostat 5 is described in EP-A-0794327 although conventional thermostats may be used. The bypass BL is arranged in parallel to the radiator 8 between the engine return line ER and the main thermostat 5. Coolant that has been cooled by the radiator 8 passes along a radiator return line RR to the main thermostat 5 and then back to the pump 2 through a pump return line RL. The main thermostat 5 controls the flow through the radiator 8, preventing flow until the engine 3 has reached an appropriate running temperature. However, as with most valves of this type, the main thermostat 5 also controls the flow in the bypass line BL. An expansion tank 9 is connected at an upper end to the top of the radiator 8 by a degas supply line DS and is connected at a lower end to the return line RL by a degas return line DR.

The engine cooling system 10 also includes an auxiliaries cooling circuit for an auxiliary heat exchanger which, in this example, is an exhaust gas recirculation (EGR) cooler 16 connected to the engine return line ER and the radiator return line RR through a secondary flow control valve 20, more conveniently referred to as the EGR mixer valve. The EGR mixer valve 20 has a first inlet connected to the engine return line ER and a second inlet connected to the radiator return line RR. Coolant is supplied to the EGR cooler 16 from an outlet 33 in the EGR mixer valve 20 through a cooler supply line CS while the coolant output from the EGR cooler 16 is delivered to the pump return line RL through a restrictor 17.

Also included in the engine cooling system 10 is a heater circuit comprising a heater 4 having a liquid to air heat exchanger for vehicle cabin heating. The heater 4 is connected by a heater supply line HS to the engine return line ER between the engine 3 and the radiator 8. After flowing through the heater 4, the coolant is returned to the pump return line RL.

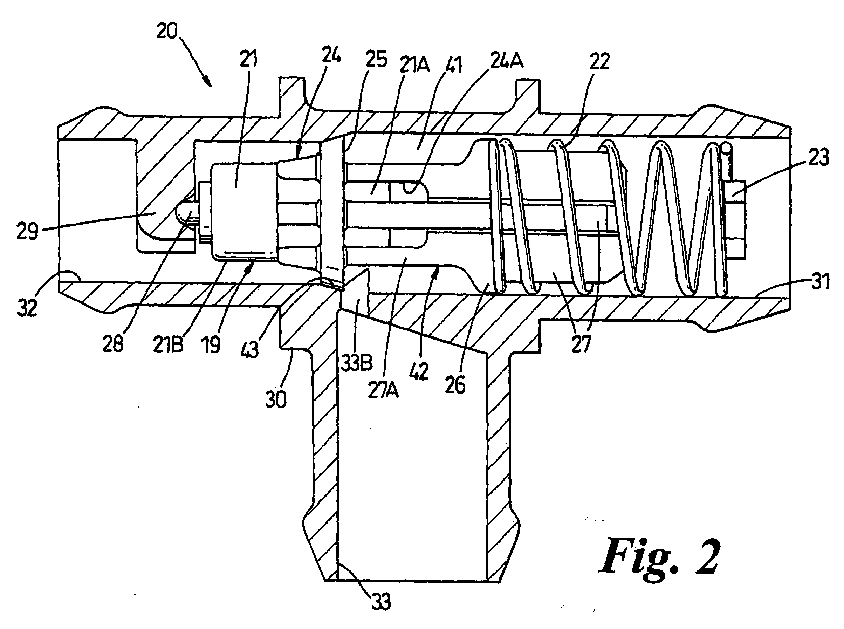

With further reference to Fig.2, the EGR mixer valve 20 comprises a housing 30 made as a one-piece plastics moulding defining the first inlet 31, the second inlet 32, the outlet 33 and a valve chamber 41. The housing 30 is in the form of a conventional tee-piece for connection to flexible hoses, the first and second inlets 31 and 32 being axially aligned and the outlet 33 having its axis perpendicular to that of the inlets. A valve assembly 42 is carried in the valve chamber 41 and comprises a valve shuttle 24 formed as a plastics moulding and a thermally-responsive actuator 19 carried partly within the shuttle 24. A biasing means in the form of a helical spring 22 acts to bias the shuttle 24 towards the second inlet 32. The valve chamber 41 is formed as an extension of the bore of the first inlet 31 and at a step of this bore with the smaller bore of the second inlet 32 a chamfered valve seat 43 is formed for cooperation with a corresponding valve seat on a main valve member 25 formed as a collar integral with the shuttle 24. An outlet port 33B is provided in the bore of the first inlet 31 to connect the valve chamber 41 with the outlet 33. This outlet port 33B is located at the end this bore nearest to the second inlet 32 and has a relatively small cross-sectional area compared to the cross-sectional area of either of the first and second inlets 31 and 32.

The thermally-responsive actuator 19 is a conventional wax actuator (generally referred to as wax capsule) having an actuator or capsule body 21 and a pushrod 28 extending towards the second inlet 32 for cooperation with an abutment 29 in the second inlet 32. The abutment 29 is carried on three spokes and is formed as an integral part of the housing 30. The capsule body 21 has a metal casing which forms a temperature sensitive portion which can transmit heat to wax for driving the pushrod 28. The capsule body 21 is cylindrical, having a small diameter portion 21A which is a push fit in a bore 24A of the shuttle 24 and a large diameter portion 21B. A step between the small diameter portion 21A and the large diameter portion 21B provides an abutment with the shuttle 24. The shuttle 24 has four radial fins 27 which form a fluted end portion at its end adjacent the first inlet 31. Each fin 27 is aligned with a corresponding longitudinal rib 27A, the bore 24A intersecting with the ribs 27A to define four apertures 24A to the side of the main valve member 25 which is towards the first inlet 31. These apertures 24A allow coolant from the first inlet 31 to directly contact the capsule casing 21 on the side of the main valve member 25 which is towards the first inlet 31. On the other side of the main valve member 25 coolant from the second inlet 32 can contact the large diameter portion 21B of the capsule body 21 as well as the area of the small diameter portion 21A which is between the large diameter portion 21B and the valve member 25 as exposed by the open ends of the ribs 27A.

Each fin 27 has a step 26 to provide a reaction surface for the helical spring 22. The helical spring 22 is a sliding fit on the fins 27 while the spring 22 is a sliding fit in the bore of first inlet 31. Hence the helical spring 22 acts as a guide for the valve shuttle 24. A ladder-shaped retainer 23 extends across the first inlet 31 through diametrically opposed windows in the housing 30 to provide a reaction surface for the helical spring 22.

Operation of the primary cooling circuit is conventional and thus will be described relatively briefly. When the engine 3 is started from cold it is desirable to increase its temperature as quickly as possible to reduce emissions and to increase fuel economy. During initial running of the engine, the main thermostat 5 prevents any coolant flowing through the radiator 8 while allowing flow through the bypass BL. Once the engine 3 has reached its normal operating temperature; in this case 90°C the main thermostat 5 starts to close off the bypass BL to allow coolant to begin flowing through the radiator 8 and prevent the engine 3 from overheating.

Operation of the EGR mixer valve 20 is as follows. Following a cold start of the engine 3, the valve 20 is in the state shown in Fig.2. The main valve member 25 is held on the seat 43 by the spring 22 to shut off the flow from the radiator return line RR through the second inlet 32 while allowing flow from the engine return line ER through the first inlet 31 into the valve chamber 41 and through the outlet port 33B at a flow rate controlled by the restrictor 22. Because the capsule body 21 is exposed to coolant from both the first inlet 31 and the second inlet 32 the capsule body 21 senses a combination of the temperatures of the coolant in the first and second inlets. Therefore, as the temperature of the engine return flow increases, the pushrod 28 can generate a force in opposition to the preload of the spring 22. However, the radiator return flow remains blocked so long as the sensed temperature is below a first predetermined temperature, which is more conveniently referred to as the opening temperature, which in this example is 35°C. This sensed temperature is an average of the temperatures of the coolant in the first and second inlets, weighted by the ratio of the areas of the capsule body 21 exposed on either side of the valve member 25. For example, if the temperature at the first inlet 31 is t, and the area exposed is A, while the temperature at the second inlet 32 is t₂ and the area exposed is A₂, the sensed temperature would be approximately (t₁-A₁+t₂-A₂) / (A₁+A₂). At the opening temperature the force generated by the pushrod 28 overcomes the pre-load of the spring 22 and the shuttle 24 starts to move away from the second inlet 32 to allow coolant from the radiator return line to flow from the second inlet 32 to the outlet 33 while continuing to allow coolant from the engine return line ER to flow from the first inlet 31 to the outlet 33.

As the temperature in the engine return line continues to rise, the force generated by the wax actuator 19 continues to increase and the shuttle 24 is moved further away from the second inlet 32. At a second predetermined sensed temperature, in this case approximately 40°C, the valve member 25 moves past the outlet port 33B and obstructs the bore of the first inlet 31 to impede the flow of coolant from the engine return line ER. There is a small working clearance between the valve member 25 and the bore of the first inlet 31 which allows a small flow of the relatively hot coolant to continue to flow from the first inlet 31 so that the capsule body 21 continues to sense the engine return line temperature as previously described. With further increases in the sensed temperature, the pushrod 28 becomes fully extended and the valve member 25 is positioned more or less in the middle of the outlet 33.

By preventing radiator return flow in the period following a cold start of the engine 3 and until the sensed temperature reaches 35°C, there is no loss of heat through the radiator 8 so the engine can warm up as quickly as possible. A further advantage of preventing or delaying flow through the radiator is that there is less stress on the radiator 8 caused by thermal cycling, particularly the heating of one area of the radiator core more than another when the flow rate is very low. This is a problem which can be particularly acute in cross-flow type radiators when the low rate means that hot flow is through the top one or two tubes only.

By sensing a combination of the temperatures of the coolant in the first and second inlets 31 and 32, the EGR mixer valve 20 is able to automatically compensate for different ambient temperatures. For example, if the temperature t, at the first inlet 31 is 35°C (i.e. the engine 3 is just starting to warm up) and the area exposed A₁ = 1cm² while the ambient temperature t₂ at the second inlet 32 is 15°C and the area exposed A₂ is 2cm², then the sensed temperature according to the weighted average formula given above would be (35x1+15x2) / (1+2), i.e. approximately 22°C, which is below the opening temperature. At this same ambient temperature of 15°C the temperature of the coolant in the first inlet 31 has to rise to 75°C for the EGR valve 20 to start to open. At a lower ambient temperature of, say 5°C, the second inlet will remain dosed until the temperature of the coolant in the first inlet reaches a significantly higher figure of 95°C because (95x1+5x2) / (1+2) = 35 In this situation, the EGR valve 20 remains closed to flow from the radiator return line until the engine 3 has reached its normal running temperature. Conversely, if the vehicle is operating in a higher ambient temperature of 30°C then the second inlet will be open at a significantly lower figure of 45°C, i.e. very soon after engine start up. Significantly higher ambient temperatures change the operation of the EGR mixer valve 20 altogether. For example, at an ambient temperature of 35°C the valve is starting to open and at ambient temperatures higher than this the valve will be already open because the sensed temperature at engine start up will exceed the opening temperature. At these higher ambient temperatures the heater 4 will not be used (except to moderate air conditioner output) and there is no detrimental effect by having the radiator 8 in immediate use because the engine 3 will reach its operating temperature very quickly.

It will be appreciated that the temperature of the coolant in the first inlet 31 is substantially the same as the temperature of the coolant leaving the engine 3 because of the constant flow through the first inlet while the engine 3 and the pump 2 are running. During the closed and opening phases of operation of the EGR valve 20, the temperature of the coolant in the second inlet 32 is substantially equal to ambient temperature, whether the second inlet is open or closed. This is because the temperature starts at ambient and remains at ambient while there is no flow through the second inlet 32. When the valve 20 starts to open, the flow through the second inlet 32 is low relative to the size of the radiator 8 so the temperature in the radiator return line RR remains at ambient until the main thermostat 5 starts to open.

The EGR mixer valve 20 could be used in conjunction with other types of auxiliary heat exchanger which require a relatively low coolant temperature, e.g. turbocharger intercoolers.

Although the EGR mixer valve 20 as described above uses a wax capsule type of thermally-responsive actuator, the actuator could be of some other thermally-responsive type, e.g. those using bi-metallic expansion or vapour pressure. Furthermore, the sensing of temperatures could be done through thermocouples or other temperature sensing means located to sense both the engine return flow and the radiator return flow and the control could be by means of a servo valve, either directly connected to the thermocouples or indirectly through an electronic control unit.

## Claims

1. An engine cooling system (10) comprising a primary cooling circuit having a radiator (8) for cooling liquid coolant for the engine (3), a bypass (BL) arranged in parallel with the radiator (8), a pump (2) to circulate the coolant through the engine (3), the radiator (8) and the bypass (BL) and a primary flow control valve (5) to control flow as between the radiator (8) and the bypass (BL), the primary flow control valve (5) being operative to prevent flow through the radiator (8) until the engine (3) has reached an appropriate running temperature, an engine supply line (SL) being arranged to deliver coolant from the pump to the engine, an engine return line (ER) being arranged to deliver coolant from the engine to the bypass (BL) and to the radiator (8), a radiator return line (RR) being arranged to deliver coolant from the radiator (8) to the primary flow control valve (5) and a pump return line (RL) being arranged to deliver coolant from the primary flow control valve (5) to the pump (2), the cooling system (10) also comprising an auxiliaries cooling circuit having an auxiliary heat exchanger (16) arranged so that coolant can flow from the engine return line (ER) and from the radiator return line (RR) through the auxiliary heat exchanger (16) and be returned as an auxiliaries return flow into the pump return line (RL), a secondary flow control valve (20) having a first inlet (31) connected to the engine return line (ER), a second inlet (32) connected to the radiator return line (RR) and an outlet (33) connected to the auxiliary heat exchanger (16) and a thermally-responsive actuator (19) controlled by a temperature sensing means (21) operative to sense coolant temperature such that the secondary flow control valve (20) can control flow as between flow from the engine return line (ER) through the first inlet (31) and flow from the radiator return line (RR) through the second inlet (32), preventing flow from the radiator return line (RR) through the second inlet (32) until a first predetermined temperature is sensed by the temperature sensing means (21) and restricting the flow from the engine return line (ER) through the first inlet (31) so that substantially no flow is allowed through the first inlet (31) when the temperature sensed by the temperature sensing means (21) exceeds a second predetermined temperature, **characterised in that** the temperature sensing means (21) is operative to sense the temperature of the coolant from the radiator return line (RR) at the second inlet (32) and the temperature or the coolant from the engine return line (ER) at the first inlet (31).

2. A cooling system as claimed in claim 1 in which the secondary flow control valve (20) comprises a housing (30), the housing defining the first inlet (31), the second inlet (32), the outlet (33) and a valve chamber (41), and a valve assembly (42) mounted in the valve chamber, the valve assembly comprising a valve shuttle (24) and a biasing means (22) to bias the valve shuttle towards a position in which the valve assembly allows flow through the first inlet to the outlet while preventing flow through the second inlet to the outlet.

3. A cooling system as claimed in claim 2 in which the valve assembly (42) further comprises the thermally-responsive actuator (19), the thermally-responsive actuator being arranged to urge the valve shuttle (24) against the biasing means (22) to allow flow through the second inlet (32) to the outlet (33) when the coolant from the engine return line (ER) reaches the first predetermined temperature while continuing to allow the flow from the first inlet (31) through to the outlet.

4. A cooling system as claimed in claim 3 in which, with increasing temperature of the flow from the engine return line (ER) the valve shuttle (24) moves further against the biasing means (22) to obstruct the flow from the engine return line (ER) through the first inlet (31) when the second predetermined temperature is attained while continuing to allow flow from the radiator return line from the second inlet (32) through to the outlet (33).

5. A cooling system as claimed in any of claims 2 to 4 in which the valve shuttle (24) has a main valve member (25) which cooperates with the housing (30) to close the second inlet (32).

6. A cooling system as claimed in claim 5 when dependent upon claim 4 in which the main valve member (25) cooperates with the housing (30) to obstruct the first inlet (31) when the second predetermined temperature is attained .

7. A cooling system as claimed in any of claims 2 to 6 in which the thermally-responsive actuator (19) comprises an actuator body fast with the valve shuttle (24) and a pushrod (28) extending from one end of the actuator body for cooperation with an abutment (29) on the housing (30), the temperature sensing means comprising a temperature sensitive portion (21) of the actuator body.

8. A cooling system as claimed in any of claims 2 to 7 in which the biasing means is a helical spring (22) which is axially guided by the housing (30).

9. A cooling system as claimed in claim 8 in which the valve shuttle (24) has a fluted end portion (27) which is engaged within the helical spring (22) so that the valve shuttle (24) is axially guided by the helical spring.

10. A cooling system as claimed in claim 7 or any claim dependent therefrom in which the valve shuttle (24) is shaped to allow coolant to directly contact the temperature sensitive portion (21) of the actuator body.

11. A cooling system as claimed in claim 10 when dependent upon claim 5 in which the valve shuttle (24) is shaped to allow coolant to directly contact one area (21A) of the temperature sensitive portion (21) of the actuator body on the side of the main valve member (25) towards the first inlet (31) and to directly contact another area (21B) of the temperature sensitive portion (21) of the actuator body on the side of the main valve member towards the second inlet (32).

## Revendications

1. Circuit de refroidissement moteur (10) comprenant un circuit de refroidissement primaire équipé d'un radiateur (8) pour refroidir le liquide de refroidissement du moteur (3), une dérivation (BL) agencée en parallèle avec le radiateur (8), une pompe (2) pour faire circuler le liquide de refroidissement à travers le moteur (3), le radiateur (8) et la dérivation (BL) et une soupape primaire de commande d'écoulement (5) pour commander l'écoulement entre le radiateur (8) et la dérivation (BL), la soupape primaire de commande d'écoulement (5) fonctionnant pour empêcher l'écoulement à travers le radiateur (8) tant que le moteur (3) n'a pas atteint une température de fonctionnement appropriée, une canalisation d'arrivée de moteur (SL) étant agencée pour acheminer le liquide de refroidissement de la pompe au moteur, une canalisation de retour de moteur (ER) étant agencée pour acheminer le liquide de refroidissement du moteur à la dérivation (BL) et au radiateur (8), une canalisation de retour de radiateur (RR) étant agencée pour acheminer le liquide de refroidissement du radiateur (8) à la soupape primaire de commande d'écoulement (5) et une canalisation de retour de pompe (RL) étant agencée pour acheminer le liquide de refroidissement de la soupape primaire de commande d'écoulement (5) à la pompe (2), le circuit de refroidissement (10) comprenant également un circuit de refroidissement auxiliaire comportant un échangeur thermique auxiliaire (16) agencé de telle façon que le liquide de refroidissement peut s'écouler de la canalisation de retour de moteur (ER) et de la canalisation de retour de radiateur (RR) à travers l'échangeur thermique auxiliaire (16) et être renvoyé en tant qu'écoulement de retour auxiliaire dans la canalisation de retour de pompe (RL), une soupape secondaire de commande d'écoulement (20) ayant une première entrée (31) connectée à la canalisation de retour de moteur (ER), une deuxième entrée (32) connectée à la canalisation de retour de radiateur (RR) et une sortie (33) connectée à l'échangeur thermique auxiliaire (16) et à un actionneur répondant aux variations thermiques (19) commandé par un moyen de détection de température (21) agissant pour détecter la température du liquide de refroidissement de telle manière que la soupape secondaire de commande d'écoulement (20) puisse commander l'écoulement entre la canalisation de retour de moteur (ER) à travers la première entrée (31) et l'écoulement de la canalisation de retour du radiateur (RR) à travers la deuxième entrée (32), empêchant l'écoulement de la canalisation de retour de radiateur (RR) à travers la deuxième entrée (32) tant qu'une première température prédéterminée n'a pas été détectée par le moyen de détection de température (21) et limitant l'écoulement de la canalisation de retour de moteur (ER) à travers la première entrée (31) de telle manière qu'aucun écoulement substantiel n'est autorisé à travers la première entrée (31) quand la température détectée par le moyen de détection de température (21) dépasse une deuxième température prédéterminée, **caractérisé en ce que** le moyen de détection de température (21) agit pour détecter la température du liquide de refroidissement de la canalisation de retour de radiateur (RR) à la deuxième entrée (32) et la température de liquide de refroidissement de la canalisation de retour de moteur (ER) à la première entrée (31).

2. Circuit de refroidissement selon la revendication 1, dans lequel la soupape secondaire de commande d'écoulement (20) comprend un logement (30), le logement définissant la première entrée (31), la deuxième entrée (32), la sortie (33) et une chambre de soupape (41), et un ensemble de soupape (42) monté dans la chambre de soupape, l'ensemble de soupape comprenant un clapet oscillant (24) et un moyen de rappel (22) pour rappeler le clapet oscillant vers une position dans laquelle l'ensemble de soupape permet l'écoulement à travers la première entrée et vers la sortie tout en empêchant l'écoulement à travers la deuxième entrée et vers la sortie.

3. Circuit de refroidissement selon la revendication 2, dans lequel l'ensemble de soupape (42) comprend en outre l'actionneur répondant aux variations thermiques (19), l'actionneur répondant aux variations thermiques étant agencé pour forcer le clapet oscillant (24) contre le moyen de rappel (22) pour permettre l'écoulement à travers la deuxième entrée (32) et vers la sortie (33) quand le liquide de refroidissement venant de la canalisation de retour de moteur (ER) atteint la première température prédéterminée tout en continuant à autoriser l'écoulement à travers la première entrée (31) et vers la sortie.

4. Circuit de refroidissement selon la revendication 3, dans lequel, parallèlement à l'accroissement de la température de l'écoulement de la canalisation de retour de moteur (ER), le clapet oscillant (24) se déplace davantage contre le moyen de rappel (22) pour bloquer l'écoulement de la canalisation de retour de moteur (ER) à travers la première entrée (31) quand la deuxième température prédéterminée est atteinte, tout en continuant à autoriser l'écoulement de la canalisation de retour de radiateur à travers la deuxième entrée (32) et vers la sortie (33).

5. Circuit de refroidissement selon l'une quelconque des revendications 2 à 4, dans lequel le clapet oscillant (24) comprend un élément principal de clapet (25) qui coopère avec le logement (30) pour fermer la deuxième entrée (32).

6. Circuit de refroidissement selon la revendication 5, quand elle est dépendante de la revendication 4, dans lequel l'élément de clapet principal (25) coopère avec le logement (30) pour bloquer la première entrée (31) quand la deuxième température prédéterminée est atteinte.

7. Circuit de refroidissement selon l'une quelconque des revendication 2 à 6, dans lequel l'actionneur répondant aux variations de température (19) comprend un corps d'actionneur solidaire du clapet oscillant (24) et un poussoir (28) s'étendant d'une extrémité du corps d'actionneur pour la coopération avec une zone d'aboutement (29) sur le logement (30), le moyen de détection de température comprenant une partie sensible à la température (21) du corps d'actionneur.

8. Circuit de refroidissement selon l'une quelconque des revendications 2 à 7, dans lequel le moyen de rappel est un ressort hélicoïdal (22) qui est guidé dans le sens axial par le logement (30).

9. Circuit de refroidissement selon la revendication 8, dans lequel le clapet oscillant (24) comporte une partie d'extrémité nervurée (27) qui s'engage dans le ressort hélicoïdal (22) de telle façon que le clapet oscillant (24) est guidé dans le sens axial par le ressort hélicoïdal.

10. Circuit de refroidissement selon la revendication 7 ou toute revendication dépendante de celle-ci, dans lequel le clapet oscillant (24) est façonné pour permettre que le liquide de refroidissement soit mis directement en contact avec la partie sensible à la température (21) du corps d'actionneur.

11. Circuit de refroidissement selon la revendication 10 quand elle est dépendante de la revendication 5, dans lequel le clapet oscillant (24) est façonné pour permettre au liquide de refroidissement d'être directement mis en contact avec une zone (21A) de la partie sensible à la température (21) du corps d'actionneur sur le côté de l'élément principal de clapet (25) qui est situé vers la première entrée (31) et à être mis directement en contact avec une autre zone (21B) de la partie sensible à la température (21) du corps d'actionneur sur le côté de l'élément principal de clapet situé vers la deuxième entrée (32).

## Patentansprüche

1. Motorkühlsystem (10) mit einem Primärkühlkreislauf mit einem Kühler (8) zum Kühlen von flüssigem Kühlmittel für den Motor (2), einem parallel zum Kühler (8) angeordneten Bypass (BL), einer Pumpe (2) zur Zirkulation des Kühlmittels durch den Motor (3), den Kühler (8) und den Bypass (BL) und einem Primärstromregelventil (5) zur Regelung von Strom als Strom zwischen dem Kühler (8) und dem Bypass (BL), wobei das Primärstromregelventil (5) dahingehend wirkt, einen Strom durch den Kühler (8) so lange zu verhindern, bis der Motor (3) eine geeignete Betriebstemperatur erreicht hat, wobei eine Motorversorgungsleitung (SL) zur Zufuhr von Kühlmittel von der Pumpe zum Motor angeordnet ist, wobei eine Motorrückleitung (ER) zur Zufuhr von Kühlmittel vom Motor zum Bypass (BL) und zum Kühler (8) angeordnet ist, wobei eine Kühlerrückleitung (RR) zur Zufuhr von Kühlmittel vom Kühler (8) zum Primärstromregelventil (5) angeordnet ist, und wobei eine Pumpenrückleitung (RL) zur Zufuhr von Kühlmittel vom Primärstromregelventil (5) zur Pumpe (2) angeordnet ist, wobei das Kühlsystem (10) des Weiteren einen Nebenaggregat-Kühlkreislauf umfasst, der einen Zusatawärmetauscher (16), der so angeordnet ist, dass Kühlmittel von der Motorrückleitung (ER) und von der Kühlerrückleitung (RR) durch den Zusatzwärmetauscher (16) strömen und als ein Nebenaggregat-Rückstrom in die Pumpenrückleitung (RL) zurückgeführt werden kann, ein Sekundärstromregelventil (20) mit einem mit der Motorrückleitung (ER) verbundenen ersten Einlass (31), einem mit der Kühlerrückleitung (RR) verbundenen zweiten Einlass (32) und einem mit dem Zusatzwärmetauscher (16) verbundenen Auslass (33), und ein wärmeempfindliches Stellglied (19) aufweist, das durch ein Temperaturerfassungsmittel (21) gesteuert wird, das dahingehend wirkt, Kühltemperatur zu erfassen, so dass das Sekundärstromregelventil (20) Strom zwischen Strom von der Motorrückleitung (ER) durch den ersten Einlass (31) und Strom von der Kühlerrückleitung (RR) durch den zweiten Einlass (32) regeln kann, wodurch Strom von der Kühlerrückleitung (RR) durch den zweiten Einlass (32) verhindert wird, bis eine erste vorbestimmte Temperatur durch das Temperaturerfassungsmittel (21) erfasst wird, und der Strom von der Motorrückleitung (ER) durch den ersten Einlass (31) begrenzt wird, so dass im Wesentlichen kein Strom durch den ersten Einlass (31) gestattet wird, wenn die durch das Temperaturerfassungsmittel (21) erfasste Temperatur eine zweite vorbestimmte Temperatur überschreitet, **dadurch gekennzeichnet, dass** das Temperaturerfassungsmittel (21) dahingehend wirkt, die Temperatur des Kühlmittels von der Kühlerrückleitung (RR) am zweiten Einlass (32) und die Temperatur des Kühlmittels von der Motorrückleitung (ER) am ersten Einlass (31) zu erfassen.

2. Kühlsystem nach Anspruch 1, bei dem das Sekundärstromregelventil (20) ein Gehäuse (30), das den ersten Einlass (31), den zweiten Einlass (32), den Auslass (33) und eine Ventilkammer (41) definiert, und eine in der Ventilkammer angebrachte Ventilanordnung (42) umfasst, wobei die Ventilanordnung einen Ventilschieber (24) und ein Vorbelastungsmittel (22) zur Vorbelastung des Ventilschiebers in eine Position, in der die ventilanordnung einen Strom durch den ersten Einlass zum Auslass gestaltet, während sie einen strom durch den zweiten Einlass zum Auslass verhindert, umfasst.

3. Kühlsystem nach Anspruch 2, bei dem die Ventilanordnung (42) weiterhin ein wärmeempfindliches Stellglied (19) umfasst, wobei das wärmeempfindliche Stellglied zum Drücken des Ventilschiebers (24) gegen das vorbelastungsmittel (22), um einen Strom durch den zweiten Einlass (32) zum Auslass (33) zu gestatten, wenn das Kühlmittel vom der Motorrückleitung (ER) die erste vorbestimmte Temperatur erreicht, während der Strom vom ersten Einlass (31) zum Auslass weiterhin gestattet wird, angeordnet ist.

4. Kühlsystem nach Anspruch 3, bei dem sich der Ventilschieber (24) mit sich erhöhender Temperatur des Stroms von der Motorrückleitung (ER) weiter gegen das Vorbelastungsmittel (22) bewegt, um den Strom von der Motorrückleitung (ER) durch den ersten Einlass (31) zu behindern, wenn die zweite vorbestimmte Temperatur erreicht ist, während Strom von der Kühlerrückleitung vom zweiten Einlass (32) zum Auslass (33) weiterhin gestattet wird.

5. Kühlsystem nach einem der Ansprüche 2 bis 4, bei dem der Ventilschieber (24) ein Hauptventilglied (25) aufweist, das mit dem Gehäuse (30) zum Schließen des zweiten Einlasses (32) zusammenwirkt.

6. Kühlsystem nach Anspruch 5, sofern von Anspruch 4 abhängig, bei dem das Hauptventilglied (25) mit dem Gehäuse (30) dahingehend zusammenwirkt, den ersten Einlass (31) zu blockieren, wenn die zweite vorbestimmte Temperatur erreicht ist.

7. Kühlsystem nach einem der Ansprüche 2 bis 6, bei dem das wärmeempfindliche Stellglied (19) einen am Ventilschieber (24) befestigten Stellgliedkörper und eine sich von einem Ende des Stellgliedkörpers erstreckende Schubstange (28) zum zusammenwirken mit einer Stoßstelle (29) am Gehäuse (30) umfasst, wobei das Temperaturerfassungsmittel einen temperaturempfindlichen Teil (21) des Stellgliedkörpers umfasst.

8. Kühlsystem nach einem der Ansprüche 2 bis 7, bei dem das Vorbelastungsmittel eine Schraubenfeder (22) ist, die durch das Gehäuse (30) axial geführt wird.

9. Kühlsystem nach Anspruch 8, bei dem der Ventilschieber (24) einen genuteten Endteil (27) aufweist, der in der Schraubenfeder (22) in Eingriff steht, so dass der Ventilschieber (24) durch die Schraubenfeder axial geführt wird.

10. Kühlsystem nach Anspruch 7 oder einem davon abhängigen Anspruch, bei dem der ventilschieber (24) so geformt ist, dass er dem Kühlmittel gestattet, den temperaturempfindlichen Teil (21) des Stellgliedkörpers direkt zu berühren.

11. Kühlsystem nach Anspruch 10, sofern von Anspruch 5 abhängig, bei dem der Ventilschieber (24) so geformt ist, dass er dem Kühlmittel gestattet, einen Bereich (21A) des temperaturempfindlichen Teils (21) des Stellgliedkörpers auf der zum ersten Einlass (31) weisenden Seite des Hauptventilglieds (25) direkt zu berühren und einen anderen Bereich (21B) des temperaturempfindlichen Teils (21) des Stellgliedkörpers auf der zum zweiten Einlass (32) weisenden Seite des Hauptventilglieds direkt zu berühren.
